# EUROPÄISCHE PATENTSCHRIFT

(11) **EP 1 460 277 B1**
(45) Veröffentlichungstag und Bekanntmachung des Hinweises auf die Patenterteilung: **31.08.2005**
(21) Anmeldenummer: 04004956.1
(22) Anmeldetag: 03.03.2004
(51) Int. Cl.: F16B 13/00

(54) **Verankerungshülse für Schutzgeländer**
Anchorage sleeve for railings
Manchon d'Anchorage pour des balustrades

(30) Priorität: 11.03.2003 DE 20303837 U
(43) Veröffentlichungstag der Anmeldung: 22.09.2004
(73) Patentinhaber: DOKA Industrie GmbH, A-3300 Amstetten (AT)
(72) Erfinder:
(74) Vertreter: HOFFMANN EITLE

(56) Entgegenhaltungen:
- DE-A- 3 844 113
- DE-A- 3 921 750

## Beschreibung

### Technisches Gebiet

Die vorliegende Erfindung betrifft eine Verankerungshülse für Schutzgeländer mit einem im wesentlichen zylindrischen Hülsenkörper, der eine äußere Umfangsfläche, eine innere Umfangsfläche und eine Einführöffnung besitzt, wobei die innere Umfangsfläche ein Innengewinde aufweist.

### Stand der Technik

Zur dauerhaften und insbesondere auch vorübergehenden Befestigung von Schutzgeländern an Bauwerksteilen wie Brückenfahrbahnen, Decken, Treppen und dergleichen im Zuge einer Baumaßnahme sind verschiedene Verankerungshülsen bekannt.

Verankerungshülsen der eingangs genannten Art werden beispielsweise von der Fa. Eisenreich, Typ "Alu DW 15", oder von der Fa. Robusta Gaukel, Typ "Gewindehülse St", vertrieben. Diese Hülsen werden in den entsprechenden Bauwerksteil eingebracht, um anschließend einen Geländersteher in die Hülse einzuschrauben, der gemeinsam mit benachbarten Geländerstehern die einzelnen Geländerabschnitte trägt. Dabei weisen die bekannten Verankerungshülsen, die zur Aufnahme hoher Belastungen ausgelegt sind, ein Innengewinde auf, das sich praktisch entlang der gesamten inneren Umfangsfläche erstreckt.

Aus diesem Grund sind zum Einschrauben eines Geländerstehers in eine Verankerungshülse des Standes der Technik zahlreiche Umdrehungen des Geländerstehers erforderlich, was umständlich und zeitaufwendig ist. Darüber hinaus besteht im rauhen Baustellenbetrieb, insbesondere bei Betonierarbeiten, stets die Gefahr, dass Gewindeabschnitte verschmutzt werden, was bei den bekannten Verankerungshülsen zu Schwierigkeiten beim Einschrauben des Geländerstehers führt.

Ferner offenbart die DE 39 21 750 A ein Verankerungselement nach dem Oberbegriff von Anspruch 1.

### Dartstellung der Erfindung

Es ist Aufgabe der vorliegenden Erfindung, eine Verankerungshülse für Schutzgeländer bereitzustellen, welche den Einbau eines Geländerstehers oder dergleichen in die Verankerungshülse vereinfacht bzw. beschleunigt.

Diese Aufgabe wird durch den Gegenstand von Anspruch 1 gelöst. Vorteilhafte Weiterbildungen der Erfindung sind in den abhängigen Ansprüchen angegeben.

Der vorliegenden Erfindung liegt der Gedanke zugrunde, eine Verankerungshülse zu entwickeln, in die ein Geländersteher mit lediglich einigen Umdrehungen eingeschraubt werden kann, der jedoch trotzdem eine ausreichende Sicherheit bietet. Dabei haben die Erfinder festgestellt, dass eine hohe Sicherung gegen Axialzug, die im Stand der Technik mittels durchgängiger Gewinde erzielt wird, bei Geländerbefestigungen im allgemeinen nicht erforderlich ist. Entscheidend ist vielmehr eine geeignete Kombination aus einer ausreichenden Sicherung gegen Axialzug und einer geeigneten Kippsicherung.

Vor diesem Hintergrund haben die Erfinder die anspruchsgemäße Verankerungshülse entwickelt, deren innere Umfangsfläche einen begrenzten Gewindeabschnitt zur Bereitstellung einer Sicherung gegen Axialzug besitzt, während die übrige innere Umfangsfläche gewindefrei ist und somit insbesondere als Kippsicherung bzw. Führung dient.

Bereits durch diese Maßnahmen lässt sich die Herstellung der Gewindehülse erheblich vereinfachen. Darüber hinaus ist jedoch erfindungsgemäß vorgesehen, dass der Gewindeabschnitt an dem der Einführöffnung gegenüber liegenden Ende der inneren Umfangsfläche gelegen ist. Hierdurch wird erreicht, dass ein Geländersteher oder dergleichen mit minimalem Aufwand in die Verankerungshülse eingebracht werden kann, indem er zunächst in die Einführöffnung eingeführt und durch den gewindefreien Abschnitt der inneren Umfangsfläche geschoben wird. Der Geländersteher ist nun bereits gegen Kippen durch die Verankerungshülse gesichert. Abschließend kann eine ausreichende Sicherung des Geländerstehers gegen Axialzug dadurch erzielt werden, dass dieser mit nur wenigen Umdrehungen in den Gewindeabschnitt eingeschraubt wird und so seine endgültige Verankerungstiefe erhält.

Dementsprechend ermöglicht die erfindungsgemäße Verankerungshülse eine gegenüber dem Stand der Technik deutlich vereinfachte Montage eines Geländerstehers oder dergleichen. Gleichzeitig wird die Konstruktion und Herstellung der Verankerungshülse erheblich vereinfacht, was bei einem derartigen Massenprodukt nicht zuletzt signifikante wirtschaftliche Vorteile mit sich bringt. Weiterhin ist die erfindungsgemäße Verankerungshülse weniger anfällig gegenüber Verschmutzungen.

Gemäß einer Alternative der vorliegenden Erfindung weist der Gewindeabschnitt höchstens drei, insbesondere höchstens zwei Gewindegänge auf. Mit Gewindegang wird dabei ein schraubenartiger Gewindepfad bezeichnet, der sich entlang der inneren Umfangsfläche erstreckt und einen Öffnungswinkel von 360° durchläuft. Durch die Reduzierung der Anzahl der Gewindegänge auf das erforderliche Maß, das für den angestrebten Anwendungsfall sinnvoll und ausreichend ist, wird die oben beschriebene einfache Montage eines Geländerstehers in der erfindungsgemäßen Verankerungshülse sichergestellt.

Alternativ oder zusätzlich ist gemäß der vorliegenden Erfindung vorgesehen, dass der Gewindeabschnitt höchstens 30%, insbesondere höchstens 20% der inneren Umfangsfläche bedeckt. Die Erfinder haben festgestellt, dass bei derartigen Verhältniswerten eine angemessene Beziehung zwischen der Sicherung eines Geländerstehers gegenüber Axialzug einerseits und Kippmomenten andererseits auf einfache aber effiziente Weise erzielt wird.

Als besonders vorteilhaft haben sich dabei Verankerungshülsen erwiesen, die eine Länge von mindestens 15 cm besitzen.

Um das Einsetzen der Verankerungshülse in den Bauwerksteil zu erleichtern, ist gemäß einer Weiterbildung der vorliegenden Erfindung vorgesehen, dass der im Wesentlichen zylindrische Hülsenkörper an dem der Einführöffnung gegenüberliegenden Ende eine konische Spitze aufweist. Hierdurch wird insbesondere das Eindrücken der Verankerungshülse in den noch weichen Beton eines Bauwerksteils erheblich erleichtert.

Ferner ist gemäß einer Weiterbildung der vorliegenden Erfindung vorgesehen, dass die Einführöffnung mit einer durchstoßbaren Abdeckung verschlossen ist. Dank der Abdeckung ist das Innere der Verankerungshülse bis zum Einsetzen eines Geländerstehers oder dergleichen gegenüber Verschmutzungen wie Beton etc. geschützt, so dass die Funktion des Innengewindes nicht beeinträchtigt werden kann. Darüber hinaus sorgt die Durchstoßbarkeit der Abdeckung dafür, dass der Vorgang des erstmaligen Einführens eines Geländerstehers nicht durch die Abdeckung verkompliziert wird. Dabei hat es sich als besonders vorteilhaft erwiesen, dass die Abdeckung Dichtsegmente aufweist, die beispielsweise durch Sollbruchstellen bzw. -linien verbunden sind und daher beim Einführen eines Geländerstehers leicht voneinander trennbar sind.Zur Sicherstellung eines ausreichenden Halts der Verankerungshülse in dem Bauwerksteil ist gemäß einer Weiterbildung der vorliegenden Erfindung, vorgesehen, dass der im Wesentlichen zylindrische Hülsenkörper Verankerungselemente aufweist, die form- und/oder kraftschlüssig einen ausreichenden Verbund zwischen Verankerungshülse und Bauwerksteil sicherstellen. Auf diese Weise können die über den Gewindeabschnitt eingeleiteten Axialzugkräfte sicher in das Bauwerk weitergeleitet werden und die Hülse kann auch gegenüber einer Verdrehung - beispielsweise beim Ein- oder Ausdrehen eines Geländerstehers - gesichert werden. Dabei ist es bevorzugt, dass die Verankerungselemente in Form von Vorsprüngen und/oder Vertiefungen ausgebildet sind, die besonders bevorzugt jeweils in Umfangs- und/oder Längsrichtung der Verankerungshülse verlaufen.

Ferner ist gemäß einer Weiterbildung der vorliegenden Erfindung vorgesehen, dass zumindest der im Wesentlichen zylindrische Hülsenkörper der Verankerungshülse aus einem Kunststoffmaterial besteht. Hierdurch wird nicht nur eine kostengünstige Herstellung der Verankerungshülse erzielt, sondern die Verankerungshülse beispielsweise als verlorenes Teil dauerhaft im Bauwerk verbleiben, ohne dieses durch Korrosion oder dergleichen zu beeinträchtigen.
Schließlich stellt die vorliegende Erfindung ein Schutzgeländer mit einer wie vorstehend beschriebenen Verankerungshülse und einem Schutzgeländersteher bereit, der mindestens eine Aufnahme für einen Geländeabschnitt aufweist und ferner in die Einführöffnung der Verankerungshülse einführbar sowie in den Gewindeabschnitt einschraubbar ist. Mit einer derartigen Kombination einer erfindungsgemäßen Verankerungshülse sowie mindestens eines passenden Schutzgeländerstehers lässt sich auf einfachste und schnelle Weise ein Schutzgeländer herstellen, das die im Baustellenbetrieb erforderliche Sicherheit bietet und wirtschaftlich herstellbar ist.

### Kurze Beschreibung der Zeichnungen

- Fig. 1: zeigt eine schematische Perspektivansicht einer bevorzugten Ausführungsform der erfindungsgemäßen Verankerungshülse;
- Fig. 2a: zeigt eine schematische Seitenansicht einer bevorzugten Ausführungsform der erfindungsgemäßen Verankerungshülse;
- Fig. 2b: zeigt eine schematische Schnittansicht einer bevorzugten Ausführungsform der erfindungsgemäßen Verankerungshülse, wobei der Schnitt entlang der Linie A-A in Fig. 2a geführt ist;
- Fig. 3: zeigt eine schematische Perspektivansicht eines Schutzgeländers unter Einsatz einer bevorzugten Ausführungsform der erfindungsgemäßen Verankerungshülse.

### Ausführliche Beschreibung bevorzugter Ausführungsformen

Bevorzugte Ausführungsformen der vorliegenden Erfindung werden nachfolgend unter Bezugnahme auf die begleitenden Zeichnungen beschrieben.

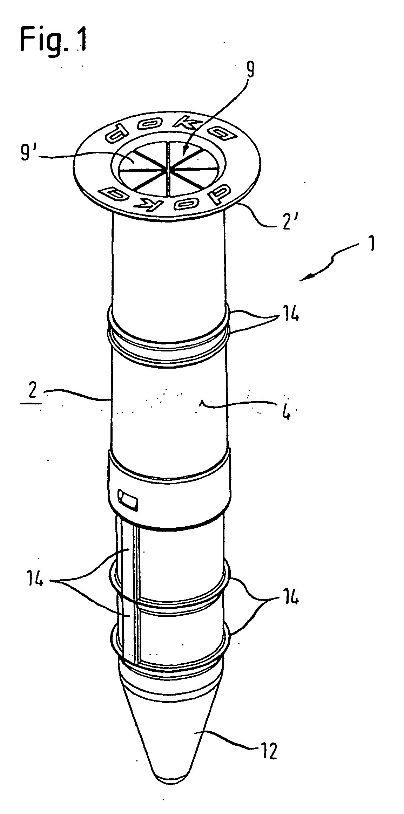

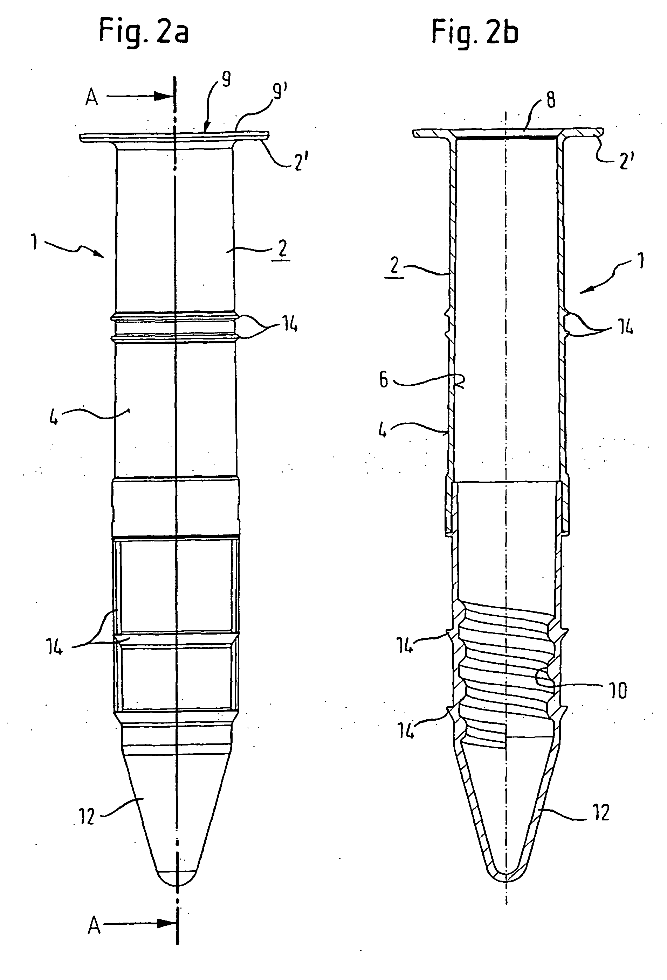

Fig. 1 zeigt eine Perspektivansicht einer bevorzugten Ausführungsform der erfindungsgemäßen Verankerungshülse, Fig. 2a bzw. Fig. 2b zeigen eine schematische Seitenansicht bzw. eine schematische Schnittansicht der in Fig. 1 gezeigten bevorzugten Ausführungsform der erfindungsgemäßen Verankerungshülse. Die gezeigte Verankerungshülse 1 besitzt einen im Wesentlichen zylindrischen Körper 2, der eine äußere Umfangsfläche 4, eine innere Umfangsfläche 6 und eine Einführöffnung 8 besitzt. Die innere Umfangsfläche 6 ist mit einem Gewindeabschnitt 10 ausgestattet, der in der vorliegenden Ausführungsform drei Gewindegänge aufweist und dementsprechend nur einen Teil der inneren Umfangsfläche 6 bedeckt. Darüber hinaus ist der Gewindeabschnitt 10 an dem der Einführöffnung 8 gegenüberliegenden Ende der inneren Umfangsfläche 6 gelegen.

Darüber hinaus besitzt die Verankerungshülse 1 eine konische Spitze 12, die ebenfalls auf dem der Einführöffnung 8 gegenüberliegenden Ende des im Wesentlichen zylindrischen Hülsenkörpers 2 angeordnet ist. Darüber hinaus ist die konische Spitze bevorzugt hohl ausgebildet, um mögliche Verschmutzungen aufzunehmen, so dass diese nicht den Gewindeabschnitt blockieren. Ferner ist die Verankerungshülse 1 mit einem umlaufenden Bund 2' ausgestattet, der die Einführöffnung 8 umschließt und mit dem zylindrischen Hülsenkörper 2 verbunden ist.

Die äußere Umfangsfläche 4 des im Wesentlichen zylindrischen Hülsenkörpers 2 ist mit Verankerungselementen ausgestattet, die in der vorliegenden Ausführungsform durch umlaufende Vorsprünge 14 gebildet sind.

Sämtliche Teile der Verankerungshülse 1 sind in der vorliegenden Ausführungsform durch ein Kunststoffmaterial gebildet, sodass die Verankerungshülse 1 beispielsweise wirtschaftlich im Spritzgießverfahren hergestellt werden kann. Alternativ können jedoch selbstverständlich auch andere Materialen zum Einsatz kommen, wie beispielsweise Aluminium-Druckguss, Blechformteile oder dergleichen.

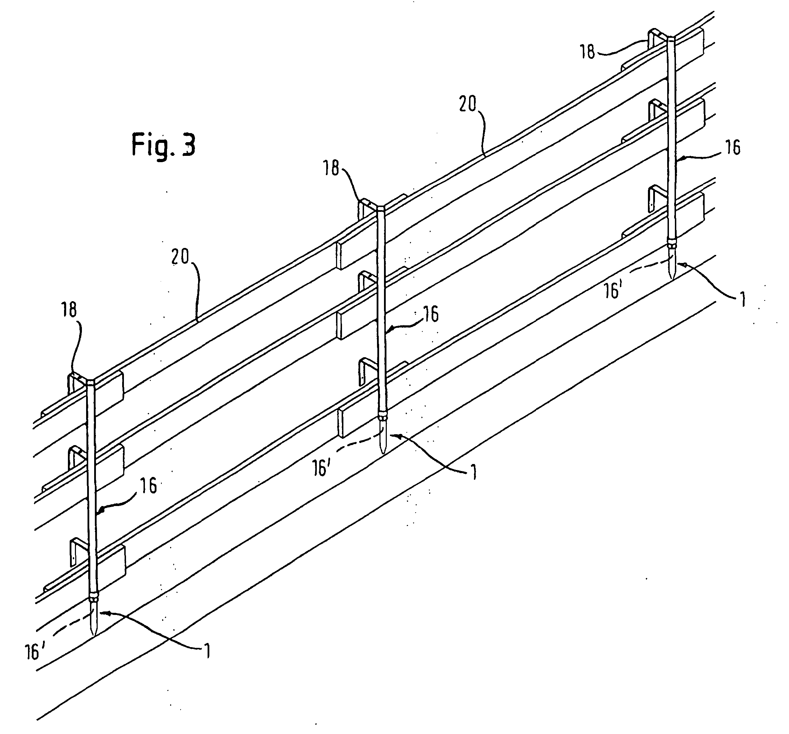

Der Einsatz der erfindungsgemäßen Verankerungshülse 1 wird nachfolgend auch unter Bezugnahme auf Fig. 3 beschrieben, die eine schematische Perspektivansicht eines Schutzgeländers zeigt, das mittels einer Ausführungsform der erfindungsgemäßen Verankerungshülse befestigt ist.

Vor dem Einbringen der Verankerungshülse wird zunächst der jeweilige Bauwerksabschnitt betoniert. Anschließend wird die Verankerungshülse 1 mit der konischen Spitze 12 voraus in den noch weichen Beton eingeführt, bis der Bund 2' der Verankerungshülse 2 an der Oberfläche des Betons anliegt. Dabei sorgt der Bund 2' dafür, dass die Verankerungshülse 1 in der gewünschten Position liegt, so dass eine eventuelle Schiefstellung oder falsche Höhenlage vermieden wird. Nach dem Erhärten des Betons wird das freie Ende des in Fig. 3 gezeigten Schutzgeländerstehers 16 in die Einführöffnung 8 der Verankerungshülse 1 eingeführt. Das freie Ende 16' des Schutzgeländerstehers 16 besitzt auf seiner äußeren Umfangsfläche ein Außengewinde, das in das Innengewinde der inneren Umfangsfläche 6 der Verankerungshülse einschraubbar ist. Das freie Ende 16' des Schutzgeländerstehers 16 wird soweit in die Verankerungshülse 1 eingeführt, bis es zu dem Gewindeabschnitt 10 der Verankerungshülse 1 gelangt. In dieser Position ist der Schutzgeländersteher 16 bereits gegen Kippen gesichert und kann nun mit wenigen Umdrehungen - im vorliegenden Ausführungsbeispiel drei Umdrehungen - in die Verankerungshülse 1 eingeschraubt werden. Dabei erhält der Schutzgeländersteher 16 durch den Eingriff zwischen dem Außengewinde an seinem freien Ende 16' und dem Innengewinde der Verankerungshülse 1 eine ausreichende Sicherung gegen Axialzug, d.h. gegenüber Zug in Richtung seiner Längserstreckung.

Zu einem späteren Zeitpunkt, beispielsweise bei Beendigung der Bauarbeiten, kann der Geländesteher 16 durch wenige Handgriffe wieder entfernt werden, in dem er wenige Male gedreht und anschließend aus der Verankerungshülse 1 herausgezogen wird.

Die Abmessungen der Verankerungshülse 1 richten sich in erster Linie nach denjenigen des zu verankernden Schutzgeländerstehers. Dabei ist es einerseits möglich, dass sich der Schutzgeländersteher weitgehend zwängungsfrei in die Verankerungshülse 1 einführen und einschrauben lässt. Alternativ ist es zur Erzielung erhöhter Verankerungskräfte auch möglich, dass die Verankerungshülse ein gewisses Untermaß im Verhältnis zum Schutzgeländersteher besitzt, sodass sich beim Einschrauben des Schutzgeländerstehers 16 in die Verankerungshülse 1 Zwangskräfte ergeben, die zu einem Festklemmen der Verankerungshülse 1 und des Schutzgeländerstehers 16 in dem Bauwerksabschnitt führen. Auf diese Weise wird auch im Zusammenspiel mit den Verankerungselementen 14 eine weiter verbesserte Verankerung in dem Bauwerksabschnitt erzielt.

## Patentansprüche

1. Verankerungshülse (1) für Schutzgeländer mit einem im wesentlichen zylindrischen Hülsenkörper (2), der eine äußere Umfangsfläche (4), eine innere Umfangsfläche (6) und eine Einführöffnung (8) besitzt, wobei die innere Umfangsfläche (6) ein Innengewinde aufweist, wobei
das Innengewinde entlang eines Gewindeabschnitts (10) vorgesehen ist, der nur einen Teil der inneren Umfangsfläche (6) bedeckt, und
der Gewindeabschnitt (10) an dem der Einführöffnung (8) gegenüber gelegenen Ende der inneren Umfangsfläche (6) gelegen ist,
**dadurch gekennzeichnet, dass**
der Gewindeabschnitt (10) höchstens drei Gewindegänge aufweist und/oder höchstens 30%der inneren Umfangsfläche (6) bedeckt.

2. Verankerungshülse nach Anspruch 1, **dadurch gekennzeichnet, dass** der Gewindeabschnitt (10) höchstens zwei Gewindegänge aufweist.

3. Verankerungshülse nach Anspruch 1 oder 2, **dadurch gekennzeichnet, dass** der Gewindeabschnitt (10) höchstens 20% der inneren Umfangsfläche (6) bedeckt.

4. Verankerungshülse nach einem der vorhergehenden Ansprüche, **dadurch gekennzeichnet, dass** sie eine Länge von mindestens 15 cm besitzt.

5. Verankerungshülse nach einem der vorhergehenden Ansprüche, **dadurch gekennzeichnet, dass** der im wesentlichen zylindrische Hülsenkörper (2) an dem der Einführöffnung (8) gegenüber gelegenen Ende eine konische Spitze (12) aufweist.

6. Verankerungshülse nach einem der vorhergehenden Ansprüche, **dadurch gekennzeichnet, dass** die Einführöffnung (8) mit einer durchstoßbaren Abdeckung (9) verschlossen ist, die bevorzugt Dichtsegmente (9') aufweist.

7. Verankerungshülse nach einem der vorhergehenden Ansprüche, **dadurch gekennzeichnet, dass** der im wesentlichen zylindrische Hülsenkörper (2) Verankerungselemente (14), insbesondere Vorsprünge und/oder Vertiefungen jeweils in Umfangs- und/oder Längsrichtung der Verankerungshülse aufweist.

8. Verankerungshülse nach einem der vorhergehenden Ansprüche, **dadurch gekennzeichnet, dass** der im wesentlichen zylindrischen Hülsenkörper (2) einen umlaufenden Bund besitzt, der bevorzugt die Einführöffnung (8) im wesentlichen umgibt.

9. Verankerungshülse nach einem der vorhergehenden Ansprüche, **dadurch gekennzeichnet, dass** das Innengewinde durch einen Bajonettverschluss gebildet ist.

10. Verankerungshülse nach einem der vorhergehenden Ansprüche, **dadurch gekennzeichnet, dass** zumindest der im wesentlichen zylindrische Hülsenkörper (2) aus einem Kunststoffmaterial besteht.

11. Schutzgeländer mit einer Verankerungshülse nach einem der vorhergehenden Ansprüche und einem Schutzgeländersteher (16), der mindestens eine Aufnahme (18) für einen Geländerabschnitt (20) aufweist und ferner in die Einführöffnung (8) der Verankerungshülse (1) einführbar sowie in den Gewindeabschnitt (10) einschraubbar ist.

## Claims

1. Anchor bush (1) for guard rail with a substantially cylindrical bush body (2) which has an outer peripheral surface (4), an inner peripheral surface (6) and an insertion opening (8), wherein the inner peripheral surface (6) has an internal thread, wherein the internal thread is provided along a threaded section (10) which covers only part of the inner peripheral surface (6), and the threaded section (10) is located at the end of the inner peripheral surface (6) located opposite the insertion opening (8), **characterised in that** the threaded section (10) has not more than three thread turns and/or covers not more than 30% of the inner peripheral surface (6).

2. Anchor bush according to claim 1, **characterised in that** the threaded section (10) has not more than two thread turns.

3. Anchor bush according to claim 1 or 2, **characterised in that** the threaded section (10) covers not more than 20% of the inner peripheral surface (6).

4. Anchor bush according to any of the preceding claims, **characterised in that** it has a length of at least 15 cm.

5. Anchor bush according to any of the preceding claims, **characterised in that** the substantially cylindrical bush body (2) has a conical tip (12) at the end located opposite the insertion opening (8).

6. Anchor bush according to any of the preceding claims, **characterised in that** the insertion opening (8) is closed with a pierceable cover (9) which preferably has sealing segments (9').

7. Anchor bush according to any of the preceding claims, **characterised in that** the substantially cylindrical bush body (2) has anchor elements (14), in particular projections and/or recesses in each case in the circumferential and/or longitudinal direction of the anchor bush.

8. Anchor bush according to any of the preceding claims, **characterised in that** the substantially cylindrical bush body (2) has a peripheral flange which preferably substantially surrounds the insertion opening (8).

9. Anchor bush according to any of the preceding claims, **characterised in that** the internal thread is formed by a bayonet fastening.

10. Anchor bush according to any of the preceding claims, **characterised in that** at least the substantially cylindrical bush body (2) is made of a plastic material.

11. Guard rail with an anchor bush according to any of the preceding claims and a guard rail upright (16) which has at least one receptacle (18) for a rail section (20) and further can be inserted in the insertion opening (8) of the anchor bush (1) and screwed into the threaded section (10).

## Revendications

1. Manchon d'ancrage (1) pour des balustrades, avec un corps de manchon (2) sensiblement cylindrique, comprenant une surface périphérique extérieure (4), une surface périphérique intérieure (6) et une ouverture d'introduction (8), la surface périphérique intérieure (6) présentant un filetage intérieur, où
le filetage intérieur est prévu le long d'un tronçon fileté (10) ne couvrant qu'une partie de la surface périphérique intérieure (6), et
le tronçon fileté (10) est placé sur l'extrémité, opposée à l'ouverture d'introduction (8), de la surface périphérique intérieure (6),
**caractérisé en ce que**
le tronçon fileté (10) présente au plus trois pas de vis et/ou couvre au plus 30% de la surface périphérique intérieure (6).

2. Manchon d'ancrage selon la revendication 1, **caractérisé en ce que** le tronçon fileté (10) fait au plus deux pas de vis.

3. Manchon d'ancrage selon la revendication 1 ou 2, **caractérisé en ce que** le tronçon fileté (10) couvre au plus 20% de la surface périphérique intérieure (6).

4. Manchon d'ancrage selon l'une des revendications précédentes, **caractérisé en ce qu'**il présente une longueur d'au moins 15 cm.

5. Manchon d'ancrage selon l'une des revendications précédentes, **caractérisé en ce que** le corps de manchon (2) sensiblement cylindrique présente une pointe (12) conique, à l'extrémité opposée à l'ouverture d'introduction (8).

6. Manchon d'ancrage selon l'une des revendications précédentes, **caractérisé en ce que** l'ouverture d'introduction (8) est fermée par un couvercle (9) transperçable, présentant de préférence des segments d'étanchéité (9').

7. Manchon d'ancrage selon l'une des revendications précédentes, **caractérisé en ce qu'**il présente, dans le corps de manchon (2) sensiblement cylindrique, des éléments d'ancrage (14), en particulier des saillies et/ou des cavités, chaque fois dans la direction périphérique et/ou longitudinale du manchon d'ancrage.

8. Manchon d'ancrage selon l'une des revendications précédentes, **caractérisé en ce que** le corps de manchon (2) sensiblement cylindrique présente une collerette de pourtour, de préférence entourant pratiquement l'ouverture d'introduction (8).

9. Manchon d'ancrage selon l'une des revendications précédentes, **caractérisé en ce que** le filetage intérieur est formé par une fermeture à baïonnettes.

10. Manchon d'ancrage selon l'une des revendications précédentes, **caractérisé en ce qu'**au moins le corps de manchon (2) sensiblement cylindrique est formé d'une matière synthétique.

11. Balustrade comprenant un manchon d'ancrage selon l'une des revendications précédentes et un poteau de balustrade (16), présentant au moins un logement (18) pour un tronçon de balustrade (20) et en outre susceptible d'être introduit dans l'ouverture d'introduction (8) du manchon d'ancrage (1), ainsi que susceptible d'être vissé dans le tronçon fileté (10) .
